# EUROPÄISCHE PATENTSCHRIFT

(11) **EP 1 155 296 B1**
(45) Veröffentlichungstag und Bekanntmachung des Hinweises auf die Patenterteilung: **05.02.2003**
(21) Anmeldenummer: 99908942.8
(22) Anmeldetag: 23.02.1999
(51) Int. Cl.: G01J 5/04

(54) **SENSORMODUL MIT INTEGRIERTER SIGNALVERARBEITUNG**
SENSOR MODULE WITH INTEGRATED SIGNAL PROCESSING
MODULE CAPTEUR AVEC DISPOSITIF DE TRAITEMENT DE SIGNAL INTEGRE

(43) Veröffentlichungstag der Anmeldung: 21.11.2001
(73) Patentinhaber: PerkinElmer Optoelectronics GmbH, 65199 Wiesbaden (DE)
(72) Erfinder: SCHIEFERDECKER, Jörg, D-65197 Wiesbaden (DE); SCHULZE, Mischa, D-65510 Hünstetten (DE)
(74) Vertreter: Beetz & Partner Patentanwälte
(86) Internationale Anmeldenummer: EP9901170
(87) Internationale Veröffentlichungsnummer: WO00050862

(56) Entgegenhaltungen:
- EP-A- 0 845 664
- DE-A- 4 331 574
- US-A- 4 803 360

## Beschreibung

Die vorliegende Erfindung betrifft einen Sensormodul gemäß dem Oberbegriff des Anspruchs 1. Ein solches Sensormodul ist aus der DE 43 31 574 A1 bekannt. Die Erfindung betrifft ein Inrarotsensormodul, das insbesondere für Koch-, Backund Heizgeräte, beispielsweise in Mikrowellenöfen, verwendet werden kann.

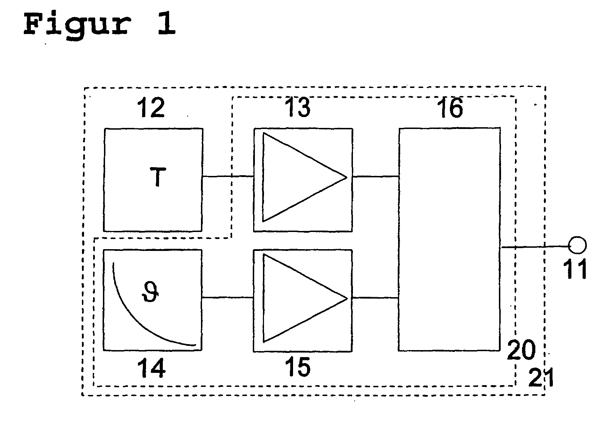

Figur 1 zeigt schematisch ein Blockschaltbild, wie es im oben genannten Stand der Technik beschrieben ist. 12 ist das eigentliche Sensorelement, das strahlungsempfindlich ist und auf einfallende elektromagnetische Strahlung hin ein elektrisches Signal an seinen Klemmen ausgibt. Es kann sich beispielsweise um ein Thermoelement handeln. Ein Verstärker 13 verstärkt das elektrische Signal des Sensorelementes. Um physikalisch bedingte Einflüsse der Umgebungstemperatur auf das Ausgangssignal des Sensorelements auszugleichen, ist außerdem eine Referenzeinrichtung (14, 15) vorgesehen, die ebenfalls temperaturempfindlich ist. 14 ist ein Temperaturreferenzsensor, vorzugsweise ein Thermistor, der in der Nähe des Sensors angeordnet ist und der entsprechend dessen Temperatur seine Parameter ändert. 15 ist ein Verstärker bzw. Impedanzwandler, der diese Änderung in ein nutzbares elektrisches Signal umwandelt, das, mit dem verstärkten Signal des Sensorelementes verknüpft, den Einfluß der Umgebungstemperatur auf das Signal des Strahlungssensors vermindert. 16 ist ein Differenzverstärker, der die Differenz der Signale vom Strahlungssensor (12,13) und vom Temperatursensor (14,15) bildet und ein ansatzweise umgebungstemperaturkompensiertes und objekttemperaturabhängiges Ausgangssignal 11 abgibt.

Die bekannte Schaltung weist verschiedene Nachteile auf: Die Temperaturkompensation wirkt nur für einen relativ kleinen Umgebungstemperaturbereich optimal, da die Kennlinien bekannter miniaturisierter Temperaturreferenzelemente typisch linear oder exponentiell verlaufen, während sich eine Abhängigkeit mit etwa der 4. Potenz als besonders günstig erwiesen hat. Die Signalverstärkung und -verarbeitung sind auf einer Leiterplatte außerhalb des Transistorgehäuses untergebracht, in dem sich der Sensorchip und der Temperaturreferenzsensor befinden. Da das Sensormodul räumlich vergleichsweise groß aufgebaut ist, kann es zu Platzproblemen beim Einbau in Anwendungsgeräten kommen. Darüber hinaus führt der Aufbau der Signalverarbeitung außerhalb des metallischen Sensorgehäuses auch dazu, daß elektromagnetische Störungen das Signal verfälschen können. Dieser Einfluß muß durch teure und aufwendige Abschirmmaßnahmen oder nachfolgende Signalbearbeitung beseitigt werden.

Aus der DE 43 31 574 A1 ist ein temperaturkompensierter Sensormodul bekannt. In einem Gehäuse sind eine Thermosäule und ein Temperaturreferenzelement angeordnet, die ihre jeweiligen Signale zum Gehäuseäußeren abgeben. Diese Signale werden dann von separaten Verstärkern weiterverarbeitet.

Aus der EP 0 845 664 A1 ist eine thermische Infraroterfassungsvorrichtung bekannt, die sowohl Sensorelemente als auch Referenzelemente aufweist.

Aufgabe der Erfindung ist es, ein Sensormodul anzugeben, das ein genau temperaturkompensiertes Ausgangssignal ausgeben kann, das der Temperatur eines Objektes entspricht. Diese Aufgabe wird mit den Merkmalen des Anspruchs 1 gelöst. Abhängige Ansprüche sind auf bevorzugte Ausführungsformen der Erfindung gerichtet.

Ein erfindungsgemäßer Sensor hat ein strahlungsempfindliches Sensorelement, eine Sensorsignalaufbereitungsschaltung, eine temperaturempfindliche Referenzeinrichtung, eine Signalverknüpfungseinrichtung, und ggf. verschiedene Einrichtungen zur Parametereinstellung und Kalibrierung. Die Sensorsignalaufbereitungsschaltung, die Referenzeinrichtung und die Signalverknüpfungseinrichtung sind auf einem einzigen Chip (Application Specific Integrated Circuit) ausgebildet. Der Chip zur Sensorsignalverarbeitung und das Sensorelement sind in einem gemeinsamen Gehäuse untergebracht. Darüber hinaus kann das Sensorelement zusammen mit der Sensorsignalaufbereitungsschaltung, der Referenzeinrichtung und der Signalverknüpfungseinrichtung auf einem einzigen Chip untergebracht sein.

Vorzugsweise ist das Gehäuse vergleichsweise klein. Beispielsweise handelt es sich um ein handelsübliches TO5- oder TO18-Gehäuse. In einer bestimmten Schnittebene kann es so ausgebildet sein, daß keine Abmessung des Querschnitts größer als 12 mm ist. Es kann sich um ein zylindrisches Gehäuse handeln, wobei der Durchmesser des Zylinders nicht größer als 9 mm ist.

Die Referenzeinrichtung dient der Kompensation des Temperaturgangs des Sensorelements. Da in der Regel der Temperaturgang des Sensorelements nichtlinear ist, kann dessen Temperaturgang durch eine lineare Referenzeinrichtung nur unzureichend nachgebildet werden. Es hat sich herausgestellt, daß eine Exponentialfunktion zur Nachbildung des Temperaturgangs des Sensorelements über schmale Bereiche oder eine Potenzfunktion zur Nachbildung des Temperaturgangs des Sensorelements über weite Bereiche geeignet sind. Insbesondere kann eine quadratische oder eine Potenzfunktion höheren Grades verwendet werden, um das nach Maßgabe des Strahlungssensors erzeugte Signal zu bewerten und den Temperaturgang des Sensorelements optimal nachzubilden. Eine Potenzfunktion 4. Grades hat sich dabei als bevorzugte Funktion zur optimalen Kompensation des Temperaturgangs des Sensorelements herausgestellt.

Die Signalverknüpfungseinrichtung kann eine Addiereinrichtung oder eine Subtrahiereinrichtung aufweisen, insbesondere einen Summierverstärker oder einen Differenzverstärker. Die Wahl einer dieser Einrichtungen erfolgt nach Maßgabe des qualitativen Vergleichs von Temperaturgang des Sensorelements einerseits und Temperaturgang der Referenzeinrichtung andererseits sowie weiter nach Maßgabe ggf. stattfindender Vorzeichenbewertungen. Sind Temperaturgang der Referenzeinrichtung und des Sensorelements selbst beispielsweise gleichläufig (beispielsweise fallen beide Ausgangssignale mit steigender Temperatur), so kann ein Differenzverstärker genommen werden, wenn keine weitere Vorzeichenbewertung der Signale erfolgt. Wird eines der Signale, beispielsweise das der Referenzeinrichtung negativ bewertet (beispielsweise durch den Impedanzwandler), so kann ein Summierverstärker verwendet werden.

Nicht nur die Umgebungstemperatur hat Einfluß auf das Signal des Sensorelements. Auch die Toleranzen und die Verlustleistung der Schaltung beeinflussen das Ausgangssignal.

Somit kann eine Kompensationseinrichtung zur Kompensation der Verlustleistung des ASICs vorgesehen sein, ebenso wie Kalibriereinrichtungen zur Verminderung des Einflusses von Toleranzen und Offsets.

Zur Einstellung bzw. Anpassung des Sensors an verschiedene Gegebenheiten kann eine vorzugsweise digitale Programmiereinrichtung ebenfalls im Gehäuse vorgesehen sein, mit der analoge bzw. digitale Parameter des Sensors eingestellt bzw. verändert werden können.

Bezugnehmend auf die Zeichnungen werden nachfolgend einzelne Ausführungsformen der Erfindung beschrieben. Es zeigen:
- Fig. 1: eine bekannte Schaltung;
- Fig. 2a-f: erfindungsgemäße Ausführungsformen;
- Fig. 3: einen Querschnitt durch einen erfindungsgemäßen Sensor mit optisch abbildender Einrichtung;
- Fig. 4: eine erfindungsgemäße Schaltungsauslegung;
- Fig. 5: eine weitere erfindungsgemäße Schaltungsauslegung;
- Fig.6a-c: weitere Querschnitte durch einen erfindungsgemäßen Sensor mit optisch abbildender Einrichtung;
- Fig 7: eine weitere erfindungsgemäße Ausführungsform;
- Fig 8a,b: Darstellung typischer Gehäusebauformen TO5 (Figur 8a) und TO18 (Figur 8b).

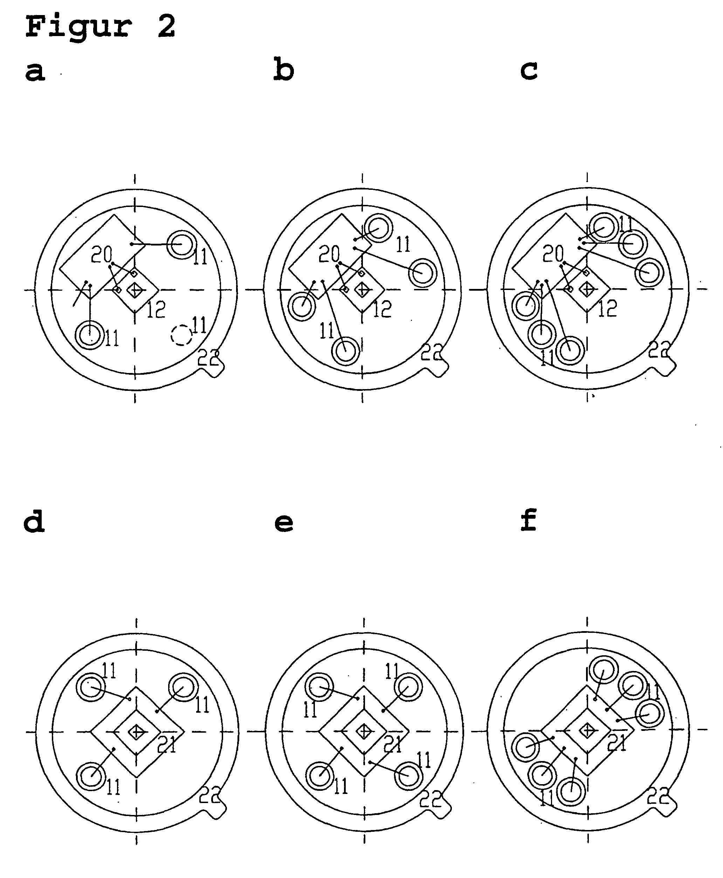

Die Figuren 2a-f zeigen schematisch in Draufsicht Aufbauten erfindungsgemäßer Sensoren. In diesen Darstellungen bezeichnen die gleichen Bezugsziffern wie in Fig. 1 gleiche Komponenten. 20 ist eine integrierte Schaltung, die zumindest die Komponenten 13 bis 16 aus Fig. 1 umfaßt. Es kann sich bei ihr um einen ASIC handeln. Separat von der integrierten Schaltung 20 ist das Sensorelement 12 vorgesehen, das mit der integrierten Schaltung 20 über Bondverbindungen verbunden sein kann. Über weitere Bondverbindungen ist die integrierte Schaltung 20 mit den externen Anschlüssen 11 verbunden.

Der Aufbau aus den Figuren 2a-c ist insofern hybrid, als das Sensorelement 12 getrennt von der integrierten Schaltung 20 vorgesehen ist. Es sind verschiedene Anschlußmöglichkeiten dargestellt. Die Figuren 2d-f zeigen Aufbauten, bei dem das Sensorelement auf der integrierten Schaltung 21 selbst vorgesehen ist. Auch hier erfolgt die Verbindung hin zu den Anschlüssen 11 über Bondverbindungen. Es sind verschiedene Anschlußmöglichkeiten dargestellt, die später erläutert werden.

22 kennzeichnet schematisch die Bodenplatte eines zylindrischen Gehäuses mit maximal 10 mm Durchmesser. In diesem Gehäuse sind sowohl die integrierte Schaltung (Sensorsignalaufbereitungsschaltung, Referenzeinrichtung, Signalverknüpfungseinrichtung) 20 untergebracht als auch das Sensorelement 12 selbst in hybridem Aufbau bzw. auch zusammen auf einem Chip 21.

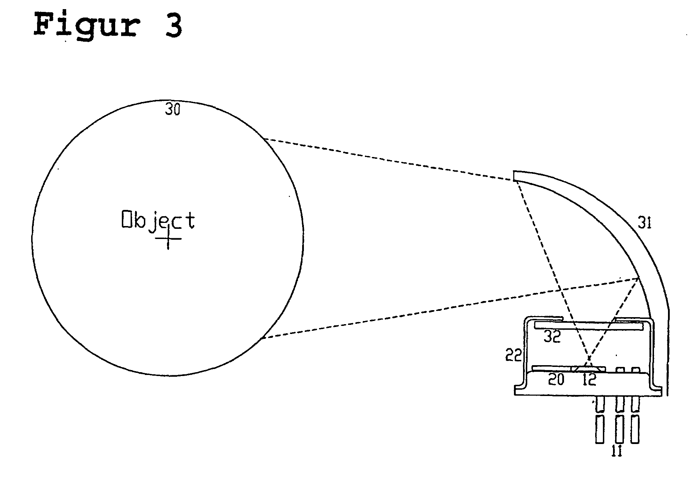

Figur 3 zeigt einen Querschnitt durch einen erfindungsgemäßen Sensor in hybridem Aufbau. Der Sensor ist zur Erfassung elektromagnetischer Strahlung, insbesondere Infrarotstrahlung, von einem Objekt 30 ausgelegt. Er weist ein außen angebrachtes optisches Abbildungs- bzw. Sammelelement 31 auf, das die vom Objekt 30 ausgesandte Strahlung auf das Sensorelement 12 im Inneren des Sensors abbildet bzw. dort sammelt.

Das Gehäuse 22 ist vorzugsweise allseitig geschlossen. Für den Durchtritt der Strahlung weist es ein Fenster 32 auf, das zumindest für den interessierenden Wellenlängenbereich der elektromagnetischen Strahlung durchlässig ist. Es kann sonst zumindest bereichsweise undurchlässig sein und erfüllt dann die Funktion eines Filters. Ansonsten kann das Gehäuse strahlungsabschirmend ausgebildet sein, beispielsweise indem die Wände und der Boden aus elektrisch leitendem Material bestehen und das Fenster bereichsweise elektrisch leitend bzw. halbleitend ausgeführt ist.

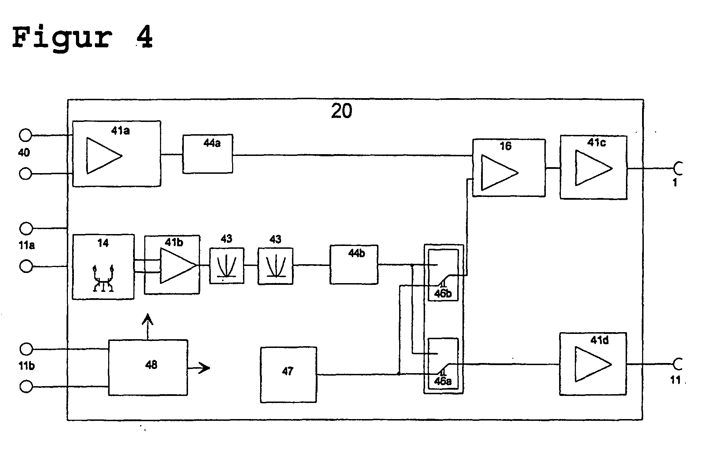

Fig. 4 zeigt als Blockschaltbild eine Ausführungsform einer erfindungsgemäßen Schaltung 20. Durch 20 ist das in Fig. 2a gezeichnete ASIC symbolisiert. Die gezeichneten Komponenten liegen damit als integrierte Schaltung auf einem Chip vor. 40 sind die Anschlüsse, über die das Signal des Sensorelements empfangen wird. 41a ist ein Vorverstärker oder auch nur ein Impedanzwandler, vorzugsweise mit Kalibriereinrichtung. 44a ist eine Offset-Korrektur. Parallel zu dem beschriebenen Zweig läuft ein weiterer Zweig. Er weist eingangs ein Referenzelement 14 auf. Das Referenzelement ist thermisch mit dem Sensor gekoppelt und liefert ein der Temperatur des Sensors entsprechendes Signal, vorzugsweise in linearer Abhängigkeit. 41b ist abermals ein Verstärker bzw. Impedanzwandler.

43 kennzeichnet Elemente zur Kennliniennachbildung. Sie bilden die Temperaturkennlinie des Sensorelements an den Klemmen 40 in einem bestimmten Temperaturbereich möglichst genau nach. Es hat sich herausgestellt, daß der Temperaturgang des Sensorelements 12 (an der Klemme 40) nichtlinear ist. Insofern kann der Temperaturgang durch ein lineares Temperatursensorelement 14 nur bereichsweise genau nachgebildet werden. Die Nachbildung 43 kann deshalb eine Exponentialfunktion für schmale Temperaturbereiche oder eine Potenzfunktion sein. Vorzuziehen sind Potenzfunktionen 2. Grades oder 4. Grades. Die quadratische Funktion wird durch eine Quadrierschaltung 43 aus dem linear von der Temperatur abhängigen Signal des Temperaturreferenzelementes erzeugt. Die Hintereinanderschaltung zweier Quadrierer 43 führt zu einer Potenzfunktion 4. Grades. 44b ist eine additive Offset-Korrektur. 46a und 46b sind Umschalter, deren Zweck später erläutert wird. 16 ist die Verknüpfungseinrichtung, sie kann als Summierverstärker ausgelegt sein, bei der der Verstärkungsgrad programmiert werden kann. Es kann sich dabei um eine Ausführungsform handeln, bei der der Temperaturgang des Temperatursensorelements 14 gegenläufig zu dem des eigentlichen Sensorelements 12 ist, oder bei der die Temperaturgänge gleich sind, aber beispielsweise im Referenzzweig eine Vorzeichenumkehr vorgenommen wird.

41c kann eine Filterschaltung bzw. auch eine Abtast-und-Halte-Schaltung sein, um ein bandbegrenztes, bzw. zeitkontinuierliches Ausgangsignal zu erzeugen, welches niederohmig ausgekoppelt werden kann. Am Ausgang 11c kann schließlich das der zu erfassenden elektromagnetischen Strahlung entsprechende elektrische Signal temperaturkompensiert empfangen werden.

Mit dem Umschalter 46b kann gewählt werden, ob das Sensorsignal temperaturkompensiert (Schalterstellung oben) oder nicht kompensiert (Schalterstellung unten) ausgegeben werden soll. Im letzteren Fall wird vorzugsweise eine Referenzspannungsquelle 47 gegen den sonst mit der Temperaturreferenzspannung belegten Eingang des Summierverstärkers geschaltet, um diesen auf einem definierten Potential zu halten. Mittels des Umschalters 46a kann wahlweise ein Temperatursignal (Schalterstellung oben) oder ein Referenzspannungssignal (Schalterstellung unten) auf eine weitere Filterschaltung, bzw. Abtast-und-Halte-Schaltung 41d gegeben werden, so daß die entsprechenden Signale am Ausgang 11d abgreifbar sind.

Es kann eine Kompensationseinrichtung vorgesehen sein, um den Einfluß der Verlustleistung der beschriebenen elektronischen Komponenten zu kompensieren. Die Verlustleistung führt zu einer Erwärmung der elektronischen Komponenten, die das Ausgangssignal des Sensorelements beeinflußt. Durch die genannte Kompensationseinrichtung kann dies vermieden werden. Da die Verlustleistung der elektronischen Schaltung auf dem Chip als konstant angenähert werden kann, kann sie durch eine geeignete Einstellung der Offsetkompensation 44a kompensiert werden.

In einer weiteren Ausführungsform kann eine vorzugsweise digitale Programmiereinrichtung 48 vorgesehen sein. Sie ist von außen über die Anschlüsse 11b zugänglich und kann der Einstellung von Systemparametern dienen. Mit der Programmiereinrichtung 48 können Verstärkungsfaktoren der Verstärker 41a, 41b, 16 , Offsetspannungen der Komponenten 44a, 44b, Schalterstellungen der Schalter 46a, 46b, die Referenzspannung 47, Parameter der Nachbildungen 43, Filterkoeffizienten der Schaltungen 41c , 41d und ähnliches eingestellt werden. Sie können fest (beispielsweise über integrierte Sicherungen) oder variabel (beispielsweise über wiederbeschreibbare Speicher) eingestellt und in jedem Fall über äußere Anschlüsse zugänglich programmiert werden.

Die Programmiereinrichtung 48 kann auch dazu ausgelegt sein, die Zuordnungen von elektrischen Anschlüssen 11, 11a-d zu elektronischen Komponenten des Sensors einzustellen bzw. zu verändern. Dadurch können externe Anschlüsse 11 eingespart werden. Die Programmiereinrichtung 48 kann einen einzigen Anschluß oder zwei Anschlüsse aufweisen, die zusätzlich zu den übrigen (vorzugsweise analogen) Anschlüssen vorgesehen sein können. Sie kann zeitserielle Signale erhalten. Die Anschlüsse können auch bidirektional genutzt werden. Die Schaltung kann vorzugsweise zwischen drei und sechs Anschlüsse 11 aufweisen. Die Figuren 2a und 2d zeigen Ausführungsformen mit drei Anschlüssen, bei denen es sich beispielsweise um Versorgungsspannung, Masse und Ausgangssignalanschluß handeln kann. Auch bei einer solchen Ausführungsform können Anschlüsse variabel belegt sein. Die Umschaltung kann beispielsweise mittels eines der Versorgungsspannung aufmodulierten Wechselsignals vorgenommen werden. Die Figuren 2b und 2e zeigen Ausführungsformen mit vier Anschlüssen, z.B. Masse, Versorgungsspannung, Ausgangssignal und analoger oder digitaler Steuereingang. Die Figuren 2c und 2f zeigen Ausführungsformen mit sechs Anschlüssen (z.B. Masse, Versorgungsspannung, kompensiertes Ausgangssignal, Steuereingang, linearer Temperaturausgang, Schwellenüberwachungsausgang).

Die Verstärkungen der Verstärker 41a und 16 können so eingestellt werden, daß durch die Verstärkung des Verstärkers 41a Kennwerttoleranzen des Sensorelements 12 und der Sensorsignalverarbeitung ausgeglichen werden, während durch die Verstärkung der Verstärker 16 das Sensorausgangssignal an den gewünschten Wertebereich angepaßt werden kann.

Die Ausgangsspannungen des Sensors lassen sich beispielsweise in einem Bereich zwischen 0 und 5V oder in einem Bereich zwischen 0 und 3V einstellen. Die Temperaturkompensation wird vorzugsweise so gewählt, daß sie in einem Umgebungstemperaturbereich von -20°C bis 100°C eine optimale Sensorsignalkompensation ergibt. Die Anschlüsse 11a dienen vorzugsweise der Spannungsversorgung des Sensormoduls.

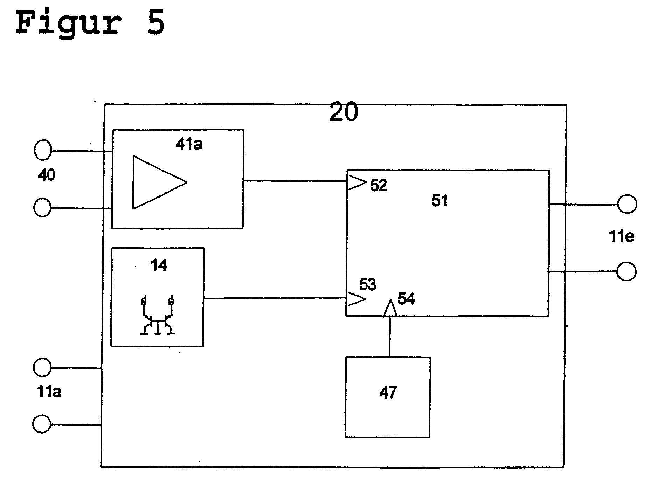

Fig. 5 zeigt eine weitere erfindungsgemäße Ausführungsform. Hier erfolgt eine weitgehend digitale Signalbe- und -verarbeitung. Wie in Fig. 4 kennzeichnet 40 die Anschlüsse für das Sensorelement 12. 11a sind die Spannungsversorgungsanschlüsse. Vom Vorverstärker bzw. Impedanzwandler 41a, vorzugsweise mit Kalibriereinrichtung, gelangt ein noch analoges Signal zu einer digitalen Schaltung 51 (Mikrokontroller). Sie weist eingangsseitig Analog-/Digital-Wandler 52-54 auf, die Analogsignale vom Eingangsverstärker 41a, vom Temperaturreferenzelement 14 und von der Konstantspannungsquelle 47 empfangen. Die übrigen Komponenten der Fig. 4 sind durch digitale Einrichtungen ersetzt.

Die Kennliniennachbildung 43 kann durch eine Formel oder mittels einer Tabelle, die Eingangswerten bestimmte Ausgangswerte zuordnet, ersetzt werden. Die Ausgangssignale können ebenfalls digital über einen oder mehrere Anschlüsse 11e ausgegeben werden. Beispielsweise können dann zeitseriell das unkompensierte Strahlungssensorsignal, das Temperatursignal, das kompensierte Strahlungssensorsignal und das Referenzspannungssignal übertragen werden. Je nach Einsatzgebiet des Sensors kann auch eine Schwellwertabfrage implementiert werden, die dazu führt, daß für einen zu überwachenden Schwellwert ein Ja/Nein-Signal ausgegeben wird. Wenn mehrere Schwellwerte überwacht werden, können entsprechend mehrere solcher Signale parallel oder zeitseriell ausgegeben werden.

Die Spannungsreferenz 47 kann beispielsweise als Bandgap-Spannungsreferenzschaltung ausgebildet sein, oder sie kann eine Zenerdiode aufweisen. Das Temperaturreferenzelement 14 kann in Form eines PTAT-Sensor ausgeführt sein.

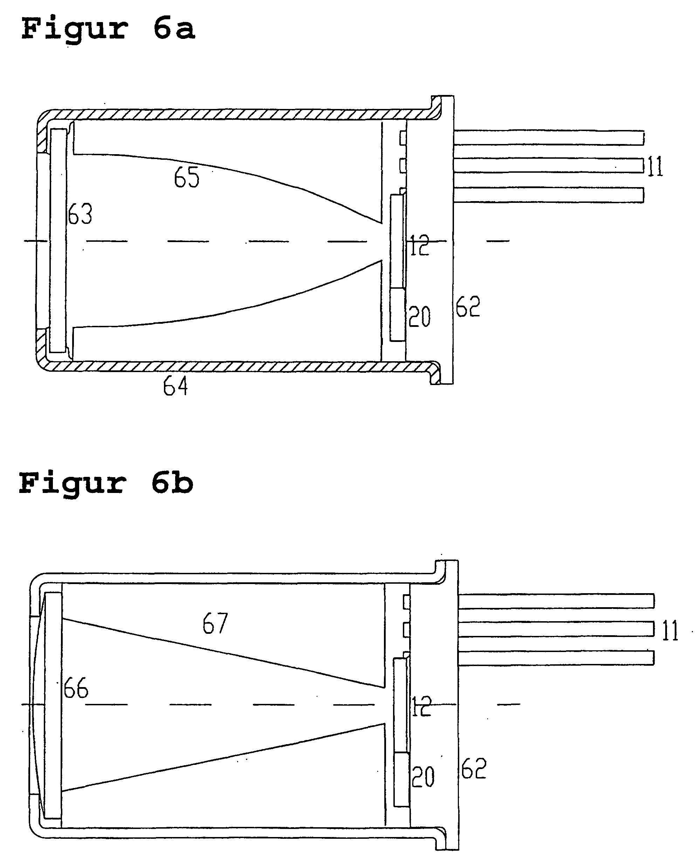

Weitere Ausführungsformen der Erfindung sind in den Figuren 6a-c gezeigt. Sie zeigen schematisch den Schnitt durch ein Gehäuse der Bauform TO5 oder kleiner, beispielweise TO18. Es hat eine zylindrische Form und weist eine Bodenplatte 62 auf, durch die hindurch die Anschlüsse 11 herausgeführt sind. Auf der Bodenplatte 62 sind das eigentliche Sensorelement 12 sowie die integrierte Schaltung 20 angebracht. Das Gehäuse ist gekapselt. Die Kapselung 64, 62 kann aus metallischem Material bestehen, um elektromagnetische Störungen abzuschirmen. In der Gehäusewand ist ein Fenster 63 vorgesehen, das zumindest für den interessierenden Wellenlängenbereich der elektromagnetischen Strahlung durchlässig ist. Darüber hinaus kann das Fenster 63 leitend oder halbleitend sein oder einen solchen Überzug aufweisen, um elektromagnetische Strahlungen abzuschirmen. Vorzugsweise ist das Fenster 63 in der oberen Stirnseite eines zylindrischen Gehäuses vorgesehen. Im Inneren des Gehäuses ist eine Abbildungs- bzw. Strahlführungseinrichtung 65 vorgesehen. In der gezeigten Ausführungsform handelt es sich beispielsweise um einen rotationssymmetrischen Parabolspiegel, der Licht, das durch das Fenster in das Innere des Gehäuses gelangt, auf das Sensorelement 12 leitet.

Anstelle einer spiegelnden Führung kann auch eine Linse 66 vorgesehen sein, die einfallendes Licht auf das Sensorelement fokussiert (Figur 6b). Die Linse kann im Inneren des Gehäuses oder außerhalb des Sensorgehäuses angebracht sein und dabei einen Teil der Gehäusewand bilden, die das Sensorgehäuse kapselt.

Zur Vermeidung von Signalverfälschungen und von Abbildungsverfälschungen durch Reflexionen an der Gehäuseinnenwandkann eine Abschattungeinrichtung an der Gehäuseinnenwand vorgesehen sein.

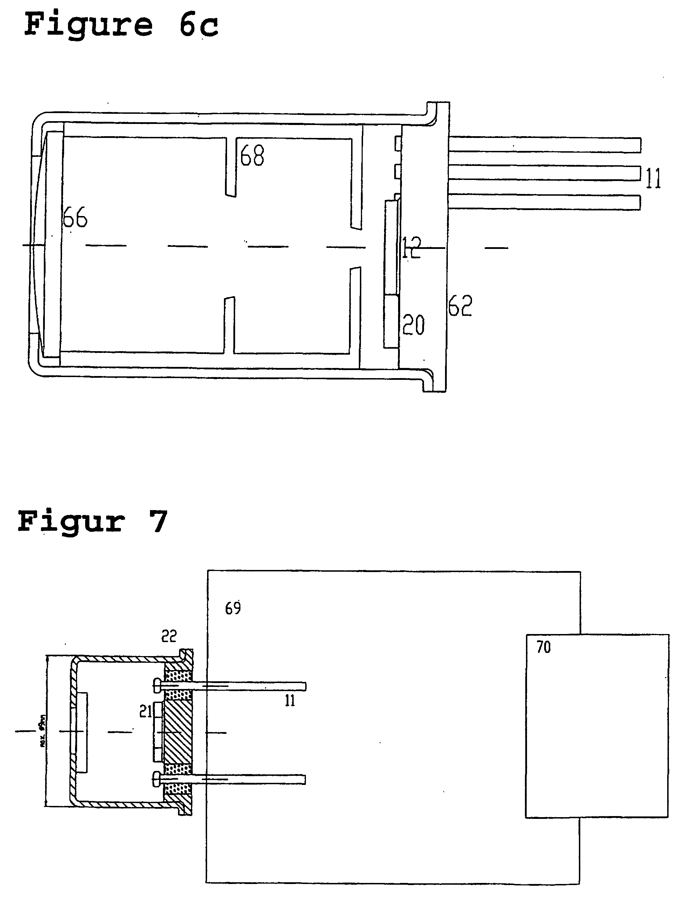

Fig. 6b und 6c zeigen Ausführungsformen, in der neben einer Linse Blenden 67, 68 im Gehäuse angebracht sind, die teilweise gestaffelt 68 angeordnet sind, um Signalreflexionen im Inneren des Gehäuses weitestmöglich zu unterdrücken. Die Oberflächen der Blenden sind vorzugsweise strahlungsabsorbierend ausgeführt. Des weiteren haben die Blenden 67, 68 die Funktion der Verminderung des störenden Einflusses schockartiger Änderungen der Umgebungstemperatur auf das Ausgangssignal des Strahlungssensors. Dazu sind die Blenden vorzugsweise mit thermisch schlecht leitendem Material ausgeführt.

Die Figur 7 zeigt eine Ausführungsform der Erfindung mit montierter Leiterplatte und einem Stecker zur elektrischen Ankopplung. Sie stellt ein oben beschriebenes, in einem zylindrischen Gehäuse mit maximal 9 mm Kappendurchmesser gekapseltes Sensormodul dar, welches auf eine Leiterplatte montiert wurde und über einen Stecker mit mindestens 3 Anschlüssen kontaktiert werden kann.

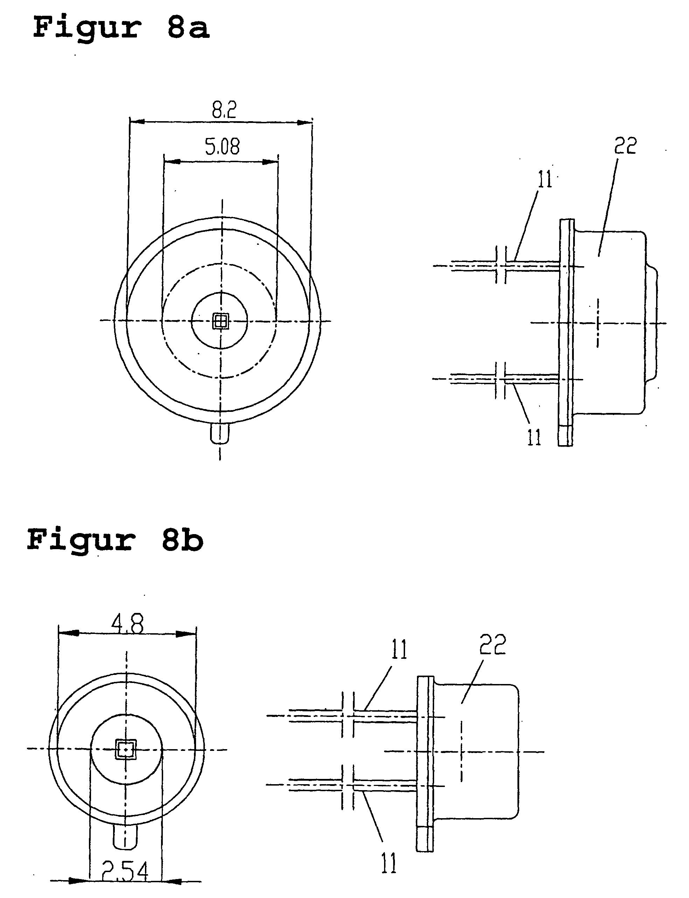

Fig. 8 zeigt Ausführungsformen des TO5-Gehäuses (Fig. 8a) und des TO18-Gehäus (Fig. 8b). Es handelt sich im wesentlichen um zylindrische Gehäuse, bei denen der Zylinderkörper einen Durchmesser von ca. 8,2 mm (TO5) bzw. 4,8 mm (TO18) hat. Die Anschlüsse 11 sind an einer der Stirnseiten angebracht und verteilen sich über einen zum Zylinder konzentrischen Kreis mit einem Durchmesser von ca. 5,1 mm (TO5) bzw. 2,5 mm (TO18). Das erfindungsgemäße Sensormodul kann in einem solchen Gehäuse untergebracht sein. Es kann auch in einem Gehäuse untergebracht sein, dessen Grundriß kleiner als der der beschriebenen TO-Gehäuse ist, bei dem aber insbesondere die Anbringung der Anschlüsse 11 am Gehäuse entsprechend den TO-Standards erfolgt ist.

Das Sensormodul eignet sich insbesondere für die berührungslose Temperaturmessung. Das Sensorelement 12 und das optische Fenster 63 bzw. die optisch abbildende Einrichtung 66 können insbesondere zum Erfassen bzw. Durchlassen von Infrarotstrahlung ausgelegt sein. Die Infrarotstrahlung wird vorzugsweise von einem Thermopilesensor erfaßt.

## Patentansprüche

1. Sensormodul mit
einem strahlungsempfindlichen Sensorelement (12), das ein strahlungsabhängiges elektrisches Ausgangssignal liefert,
einer Sensorsignalaufbereitungsschaltung (13, 41a, 44a), die das Ausgangssignal des Sensorelements (12) empfängt und ein strahlungsabhängiges erstes elektrisches Signal liefert,
einer temperaturempfindlichen Referenzeinrichtung (14, 15, 41b, 43, 44b) mit einem Temperatursensorelement (14), die ein temperaturabhängiges zweites elektrisches Signal liefert, und
einer Verknüpfungseinrichtung (16) zur Verknüpfung der beiden elektrischen Signale,
**dadurch gekennzeichnet, daß**
die Sensorsignalaufbereitungsschaltung (13, 41a, 44a), die Referenzeinrichtung (14, 15, 41b, 43, 44b) und die Signalverknüpfungseinrichtung (16) auf einem einzigen Chip (20, 21) ausgebildet sind,
der Chip (20, 21) und das Sensorelement (12) in einem gemeinsamen Gehäuse (22, 62, 64) untergebracht sind, und
die Referenzeinrichtung außerdem ein Kennliniennachbildungselement (43) aufweist, das die Temperaturkennlinie des Sensorelements mit einer Exponentialfunktion oder einer Potenzfunktion nachbildet.

2. Sensormodul nach Anspruch 1, **dadurch gekennzeichnet, daß** das Gehäuse (22, 62, 64) elektrisch leitende oder halbleitende Wände aufweist.

3. Sensormodul nach Anspruch 1 oder 2, **dadurch gekennzeichnet, daß** das Gehäuse (22, 62,64) zylindrisch ist und der Zylinder einen Durchmesser kleiner 10 mm hat.

4. Sensormodul nach einem der vorherigen Ansprüche, **dadurch gekennzeichnet daß** das Gehäuse (22, 62, 64) ein Gehäuse der Bauform TO5 ist.

5. Sensormodul nach einem der vorherigen Ansprüche, **dadurch gekennzeichnet, daß** die Sensorsignalaufbereitungsschaltung (13, 41a, 44a) einen ersten Verstärker (41a) aufweist.

6. Sensormodul nach einem der vorherigen Ansprüche, **dadurch gekennzeichnet, daß** die Referenzeinrichtung (14, 15, 41b, 43, 44b) ein Referenzelement (14) und einen zweiten Verstärker (41b) aufweist.

7. Sensormodul nach einem der vorherigen Ansprüche, **dadurch gekennzeichnet, daß** die Referenzeinrichtung (14, 15, 41b, 43, 44b) einen oder mehrere Quadrierer (43) aufweist.

8. Sensormodul nach einem der vorherigen Ansprüche, **gekennzeichnet durch** eine Kompensationseinrichtung (44a) zur Kompensation des Einflusses der Verlustleistung elektronischer Komponenten auf das Ausgangssignal.

9. Sensormodul nach einem der vorherigen Ansprüche, **gekennzeichnet durch** ein im Gehäuse (22, 62, 63) vorgesehenes strahlungsdurchlässiges Fenster (64, 66), das elektrisch leitend oder halbleitend ist oder das eine solche Beschichtung aufweist.

10. Sensormodul nach einem der vorherigen Ansprüche, **gekennzeichnet durch** ein im Gehäuse (22, 62, 66) vorgesehenes optisches Abbildungselement (65, 66).

11. Sensormodul nach Anspruch 9 und 10, **dadurch gekennzeichnet, daß** das Abbildungselement (65, 66) das Fenster (63, 66) des Gehäuses (22, 62, 64) bildet.

12. Sensormodul nach Anspruch 10 oder 11, **dadurch gekennzeichnet, daß** das Abbildungselement (65, 66) eine Linse (66) oder einen Spiegel (65) aufweist.

13. Sensormodul nach einem der vorherigen Ansprüche, **gekennzeichnet durch** eine im Gehäuse (22, 62, 64) vorgesehene vorzugsweise digitale Programmiereinrichtung (48, 51), mit der Betriebsparameter des Sensormoduls eingestellt werden können.

14. Sensormodul nach einem der vorherigen Ansprüche, **dadurch gekennzeichnet, daß** die Verknüpfungseinrichtung (16) ein analoger Summierverstärker ist.

15. Sensormodul nach einem der Ansprüche 1 bis 13, **dadurch gekennzeichnet, daß** die Verknüpfungseinrichtung eine digitale Schaltung (51) ist, die über Analog-Digital-Wandler die Signale von Sensoreinrichtung (13, 41a) und Referenzeinrichtung (14, 15, 41b) empfängt und ein digitales, vorzugsweise zeitserielles Signal ausgibt.

16. Sensormodul nach einem der Ansprüche 1 bis 13 und 15, **dadurch gekennzeichnet, daß** die Verknüpfungseinrichtung eine digitale Schaltung (51) ist, die digitale Signale als Ja/Nein-Werte ausgibt, die zum Überwachen einer Temperaturschwelle und/oder zum Regeln einer oder mehrerer Temperaturen auf einen oder mehrere Sollwerte dient, wobei die Sollwerte programmiert werden können.

17. Sensormodul nach einem der vorherigen Ansprüche, **dadurch gekennzeichnet, daß** die Sensorsignalaufbereitungsschaltung (13, 41a, 44a), die Referenzeinrichtung (14, 15, 41b, 43, 44b) und die Verknüpfungseinrichtung (16, 51) als integrierte Schaltung auf einem Chip ausgebildet sind.

## Claims

1. Sensor module comprising
a radiation-sensitive sensor element (12) providing a radiation-dependent electric output signal,
a sensor signal processing circuit (13, 41a, 44a) receiving the output signal from the sensor element (12) and providing a radiation-dependent first electric signal,
a temperature-sensitive reference means (14, 15, 41b, 43, 44b) comprising a temperature sensor element (14) and providing a temperature-dependent second electric signal, and
a combination means (16) for combining the two electric signals,
**characterised in that**
the sensor signal processing circuit (13, 41a, 44a), the reference means (14, 15, 41b, 43, 44b) and the signal combining means (16) are formed on a single chip (20, 21),
the chip (20, 21) and the sensor element (12) are accommodated in a common housing (22, 62, 64), and
the reference means further includes a characteristic modelling element (43) modelling the temperature characteristic of the sensor element with an exponential function or a power function.

2. Sensor module according to claim 1, **characterised in that** the housing (22, 62, 64) is provided with electrically conductive or semi-conductive walls.

3. Sensor module according to claim 1 or 2, **characterised in that** the housing (22, 62, 64) has a cylindrical shape and the cylinder has a diameter of less than 10 mm.

4. Sensor module according to one of the preceding claims, **characterised in that** the housing (22, 62, 64) is a housing of the design TO5.

5. Sensor module according to one of the preceding claims, **characterised in that** the sensor signal processing circuit (13, 41a, 44a) is provided with a first amplifier (41a).

6. Sensor module according to one of the preceding claims, **characterised in that** the reference means (14, 15, 41b 43, 44b) comprises a reference element (14) and a second amplifier (41b).

7. Sensor module according to one of the preceding claims, **characterised in that** the reference means (14, 15, 41b 43, 44b) comprises one or several squaring means (43).

8. Sensor module according to one of the preceding claims, **characterised by** a compensation means (44a) for compensating the influence of the power dissipation of electronic components on the output signal.

9. Sensor module according to one of the preceding claims, **characterised by** a radiation-transmissible window (64, 66) provided in the housing (22, 62, 63), said window (64, 66) being electrically conductive or semi-conductive or having an electrically conductive or semi-conductive coating.

10. Sensor module according to one of the preceding claims, **characterised by** an optical imaging element (65, 66) provided in the housing (22, 62, 64).

11. Sensor module according to claim 9 and 10, **characterised in that** the imaging element (65, 66) forms the window (63, 66) of the housing (22, 62, 64).

12. Sensor module according to claim 10 or 11, **characterised in that** the imaging element (65, 66) comprises a lens (66) or a mirror (65).

13. Sensor module according to one of the preceding claims, **characterised by** preferably digital programming means (48, 51) provided in the housing (22, 62, 64) for setting the operating parameters of the sensor module.

14. Sensor module according to one of the preceding claims, **characterised in that** the combining means (16) is an analogous integrator amplifier.

15. Sensor module according to one of the claims 1 to 13, **characterised in that** the combining means is a digital circuit (51) receiving the signals from the sensor means (13, 41a) and the reference means (14, 15, 41b) via A/D converters and outputting a digital, preferably temporally serial signal.

16. Sensor module according to one of the claims 1 to 13 and 15, **characterised in that** the combining means is a digital circuit (51) outputting digital signal as YES/NO values to be used for monitoring a temperature threshold and/or for controlling one or more temperatures to one or more target values, the target values being programmable.

17. Sensor module according to one of the preceding claims, **characterised in that** the sensor signal processing circuit (13, 41a, 44a), the reference means (14, 15, 41b, 43, 44b) and the combining means (16, 51) are formed as an integrated circuit on one chip.

## Revendications

1. Module de détection comprenant :
un élément détecteur (12) sensible au rayonnement, qui délivre un signal électrique de sortie proportionnel à l'intensité du rayonnement,
un circuit de traitement des signaux en provenance du détecteur (13, 41a, 44a), qui reçoit le signal de sortie émis par l'élément détecteur (12) et qui délivre un premier signal proportionnel à l'intensité du rayonnement,
un montage de référence sensible à la température (14, 15, 41b, 43, 44b), muni d'un élément détecteur de température (14), qui délivre un deuxième signal proportionnel à la température et
un dispositif de combinaison (16) pour combiner les deux signaux électriques,
**caractérisé en ce que**
le circuit de traitement des signaux (13, 41a, 44a), le montage de référence (14, 15, 41b, 43, 44b) et le dispositif de combinaison des signaux (16) sont configurés sur une seule puce (20, 21),
la puce (20, 21) et l'élément détecteur (12) sont logés dans un boîtier commun (22, 62, 64) et
le montage de référence comporte en outre un élément de reproduction de caractéristique (43) qui reproduit la caractéristique de température de l'élément détecteur par une fonction exponentielle ou une fonction de puissance.

2. Module de détection selon la revendication 1, **caractérisé en ce que** le boîtier (22, 62, 64) comporte des parois semi-conductrices ou électriquement conductrices.

3. Module de détection selon la revendication 1 ou 2, **caractérisé en ce que** le boîtier (22, 62, 64) a une forme cylindrique et que le diamètre du cylindre est inférieur à 10 mm.

4. Module de détection selon l'une des revendications précédentes, **caractérisé en ce que** le boîtier (22, 62, 64) est un boîtier du type TO5.

5. Module de détection selon l'une des revendications précédentes, **caractérisé en ce que** le circuit de traitement des signaux provenant du détecteur (13, 41a, 44a) comprend un premier amplificateur (41a).

6. Module de détection selon l'une des revendications précédentes, **caractérisé en ce que** le montage de référence (14, 15, 41b, 43, 44b) comprend un élément de référence (14) et un deuxième amplificateur (41b).

7. Module de détection selon l'une des revendications précédentes, **caractérisé en ce que** le montage de référence (14, 15, 41b, 43, 44b) comporte un ou plusieurs éléments d'élévation au carré (43).

8. Module de détection selon l'une des revendications précédentes, **caractérisé en ce qu'**il est muni d'un dispositif de compensation (44a) destiné à compenser l'incidence exercée par la puissance dissipée par les composants électroniques sur le signal de sortie.

9. Module de détection selon l'une des revendications précédentes, **caractérisé en ce qu'**il est prévu dans son boîtier (22, 62, 63) une fenêtre (64, 66) laissant passer le rayonnement, qui est électriquement conductrice ou semi-conductrice ou qui est munie d'un revêtement de cette nature.

10. Module de détection selon l'une des revendications précédentes, **caractérisé en ce qu'**il est prévu dans son boîtier (22, 62, 66) un élément de projection optique (65, 66).

11. Module de détection selon les revendications 9 et 10, **caractérisé en ce que** l'élément de projection (65, 66) constitue la fenêtre (63, 66) du boîtier (22, 62, 64).

12. Module de détection selon la revendication 10 ou 11, **caractérisé en ce que** l'élément de projection (65, 66) comprend une lentille (66) ou un miroir (65).

13. Module de détection selon l'une des revendications précédentes, **caractérisé en ce qu'**il est prévu dans le boîtier (22, 62, 64) un dispositif de programmation (48, 51), de préférence numérique, qui permet d'introduire pour la mise en service les paramètres de fonctionnement du module de détection.

14. Module de détection selon l'une des revendications précédentes, **caractérisé en ce que** le dispositif de combinaison (16) est un amplificateur d'addition analogique.

15. Module de détection selon l'une des revendications 1 à 13, **caractérisé en ce que** le dispositif de combinaison est un circuit numérique (51) qui reçoit, par l'intermédiaire d'un convertisseur analogique - numérique, les signaux en provenance du dispositif de détection (13, 41a) et du montage de référence (14, 15, 41b) et qui émet un signal numérique, de préférence du type série chronologique.

16. Module de détection selon l'une des revendications 1 à 13 et 15, **caractérisé en ce que** le dispositif de combinaison est un circuit numérique (51), qui émet des signaux numériques sous la forme de grandeurs tout ou rien, servant à surveiller un seuil de température et / ou encore, à réguler une ou plusieurs températures en fonction d'une ou de plusieurs valeurs de consigne, lesdites valeurs de consigne pouvant en l'occurrence être programmées.

17. Module de détection selon l'une des revendications précédentes, **caractérisé en ce que** le circuit de traitement des signaux du détecteur (13, 41a, 44a), le montage de référence (14, 15, 41b, 43, 44b) et le dispositif de combinaison (16, 51) sont configurés sur une puce sous la forme d'un circuit intégré.
